# EUROPÄISCHE PATENTSCHRIFT

(11) **EP 0 899 082 B1**
(45) Veröffentlichungstag und Bekanntmachung des Hinweises auf die Patenterteilung: **06.11.2002**
(21) Anmeldenummer: 98115604.5
(22) Anmeldetag: 19.08.1998
(51) Int. Cl.: B29C 63/42, B65B 9/13, B65B 61/06

(54) **Verfahren zum Abtrennen eines geöffneten Folienschlauchstücks und Vorrichtung zur Durchführung des Verfahrens**
Process and apparatus for severing open sections of tubular webs
Procédé et dispositif pour couper des sections ouvertes de bande tubulaire

(30) Priorität: 29.08.1997 DE 19737689
(43) Veröffentlichungstag der Anmeldung: 03.03.1999
(73) Patentinhaber: Lortz, Hans Joachim, 64823 Gross-Umstadt (DE)
(72) Erfinder: Lortz, Hans Joachim, 64823 Gross-Umstadt (DE)
(74) Vertreter: Kewitz, Ansgar, Dipl.-Inform.

(56) Entgegenhaltungen:
- FR-A- 2 730 210
- US-A- 4 179 863
- US-A- 5 001 887
- US-A- 5 531 858
- US-A- 5 566 527

## Beschreibung

Die Erfindung betrifft ein Verfahren zum Abtrennen eines geöffneten Folienschlauchstücks von einem endlos aufgewickelten flach-liegenden Folienschlauch, für dessen anschließendes Aufziehen und Aufschrumpfen auf einen Gegenstand, sowie eine Vorrichtung gemäß dem Oberbegriff des unabhängigen Anspruchs 5 und eine Vorrichtung gemäß dem Oberbegriff des unabhängigen Anspruchs 6.

Durch die DE 3208234 A1 ist eine Vorrichtung zum Aufsetzen von Schlauchabschnitten aus Kunststofffolien oder dergleichen auf Gefäße mit einem die Gefäße kontinuierlich auf einer geradlinigen Bahn bewegenden Förderer, einem um eine horizontale Drehachse kontinuierlich umlaufenden Rotor, an dessen Umfang steuerbare Paare von Spreizbacken angeordnet sind, welche die zumindest teilweise geöffneten Schlauchabschnitte an umlaufenden Saugern übernehmen und auf die Gefäße stülpen, sowie mit den Saugern vorgeschalteten zuführeinrichtungen für die zusammengefalteten Schlauchabschnitte bekannt geworden, die sich dadurch auszeichnet, dass jedem Paar von Spreizbacken ein eigenes Paar von Saugern zugeordnet ist, das beweglich auf dem Rotor angeordnet und derart steuerbar ist, dass es die zusammengefalteten Schlauchabschnitte von der Zuführeinrichtung übernimmt, zumindest teilweise aufspaltet und auf das zugehörige Paar von Spreizbacken steckt. Eine derartige Vorrichtung erfordert im Hinblick auf das Aufsetzen von Schlauchabschnitten aus Kunststofffolien auf Gefäße unbedingt eine Trenneinrichtung, welche zusätzlich den Aufbau einer derartigen Vorrichtung im Hinblick auf eine Beschleunigung des Aufsetzens der Schlauchabschnitte beeinträchtigt. Eine derartige Trenneinrichtung ist jeweils an die Größe der Gefäße anzupassen, was einen beachtlichen Zeitaufwand mit sich bringt. Darüber hinaus sind zusätzliche übertragungsmittel erforderlich, um die abgetrennten Schlauchteile korrekt zu positionieren, um diese anschließend dann auf die mit den Folien zu versehenden Flaschen bzw. Gefäße aufzusetzen.
Um eine solche Vorrichtung für einen rascheren Durchlauf vorzusehen, sind auch die Rüstzeiten für das Vorbereiten und Aufsetzen der Schlauchfolien in Rechnung zu stellen, und es ist eine bunte Folge von mit Kunststoff zu umhüllenden Gefäßen nicht möglich. Außerdem ist beim Überstreifen der Schlauchstücke auf die aus Deckel und Hülse bestehenden Gefäße eine ständige zeitaufwendige Überwachung erforderlich, um ein Doppelbe.schicken eines Gefäßes sicher zu vermeiden. Damit sind einer Durchsatzerhöhung sehr enge Grenzen gesetzt. Gleichzeitig wird mit der Durchsatzerhöhung auch der Ausschuss derartiger zu sleevender Gefäße erhöht.

Durch die Deutsche Offenlegungsschrift 3424081 A1 ist ein Verfahren zum Anbringen eines Etiketts an einem Glasbehälter bei den Etikettmaterial aus wärmeschrumpfbarem Kunststoff von einem Wickelvorrat an eine Trommel abgegeben wird, wo das Material einzelner Etiketten durchtrennt wird, die dann einzeln an eine Reihe von Wickeldornen übertragen werden, die von einem drehbaren Revolver getragen werden, wobei die Etikette durch einen Wärmevorgang zu vollständigen zylindrischen Hüllen auf den Dornen geschlossen werden, wobei ein einzelner Behälter oberhalb jedes Dorns und axial ausgerichtet zu diesem abgestützt wird, die Behälter und Dorne synchron zueinander bewegt werden, die Hülle teleskopartig vom Dorn auf den darüber angeordneten Behälter geschoben wird, bekannt geworden, welches sich dadurch auszeichnet, dass der Behälter und die Hülle um ihre vertikale Achse gedreht werden, während sie sich um die Achse des Revolvers bewegen, und dass die Hülle um den Behälter wärmegeschrumpft wird, während sich der Behälter bewegt, und dass der Behälter mit dem darauf befindlichen Etikett dann an ein Auslasssternrad freigegeben wird, dass den Behälter auf einem sich bewegenden Bandförderer bewegt. Bei diesem Verfahren wird ein wärmeschrumpfbares Material von einem Wickelvorrat abgegeben, anschließend über Wickeldorne zu einem Schlauchabschnitt geformt, an einer Mantellinie verschweißt und anschließend auf den zu etikettierenden Behälter gegeben und dort aufgeschrumpft, ehe es in einem weiteren Fördervorgang weitergebbar ist.

Auch eine derartige Einrichtung verlangt für das Aufschrumpfen von aufschrumpfbaren Folien zusätzliche Arbeitsgänge, wie das Bilden von Schlauchabschnitten aus geraden Folienabschnitten, welches für sich allein ein bereits zeitaufwendiges Herstellungsverfahren darstellt und somit einer Beschleunigung beim Herstellen aufzuschrumpfender Folien auf Gefäße für ein nachfolgendes Sleeven dieser Folien auf die Gefäße im Wege steht.

Durch das Europäische Patent mit der Veröffentlichungsnummer 0109105, welches eine Vorrichtung zur Führung eines aus biegsamem Werkstoff hergestellten Schlauches, insbesondere zum Öffnen und Fördern eines flachgedrückten Schlauches aus Kunststoff, welcher zu einer Rolle aufgewickelt ist, welche Vorrichtung besteht aus einem Spreizdorn, dessen Oberfläche in einer Anzahl von Umfangspunkten von am meisten außenliegenden Teil von Rollen gebildet wird, in Bezug auf die Dornachse betrachtet, welche Rollen rotierbar um eine senkrecht zur Dornachse verlaufende Welle gelagert sind, wobei der Dorn in dem Zwischenraum zwischen wenigstens zwei gegenüberliegenden Stützrollen hineinragt, welche Rollen um Wellen antreibbar sind, welche senkrecht zur Dornachse gelagert sind, welche Rollen vom Spreizdorn getragen werden und mit jenen Stützrollen in Eingriff bringbar sind, welche Vorrichtung weiter mit einer Schneidvorrichtung zum Abschneiden eines geöffneten Schlauchteiles versehen ist, bekannt geworden, die sich dadurch auszeichnet, dass der Dorn an seinem Abfuhrende vorbei der an dieser Stelle vorgesehenen Schneidvorrichtung mit einer Verlängerung versehen ist, während ebenfalls auf senkrecht zur Dornachse stehenden Wellen gelagerte Antriebsrollen zum Antreiben des abgeschnittenen Schlauchteils vorgesehen sind, welche Rollen unabhängig als die Stützrollen und dadurch mit viel höherer Geschwindigkeit als die Stützrollen in einem gewählten Augenblick antreibbar sind und welche Rollen mit der Oberfläche der Verlängerung im Eingriff sind, oder mit dieser Oberfläche in Eingriff drückbar sind.
Eine derartige Vorrichtung verlangt, um eine sichere Übertragung von abgeschnittenem endlosen Schlauchmaterial auf einen zu umhüllenden Körper vornehmen zu können, erfindungsgemäß eine zusätzliche Verlängerung, welche unabhängig von der Vorschubgeschwindigkeit einer ersten Anordnung von Transporteinrichtungen dann in Tätigkeit gesetzt wird, wenn ein zu sleevendes Gefäß unterhalb der Verlängerung positioniert eingetroffen ist, um den Sleevvorgang, das heißt das überstreifen und das anschließende Aufschrumpfen des Folienschlauches auf das Gefäß, bewirken zu können. Außerdem muss in Abhängigkeit der Höhe des zu sleevenden aus Deckel und Hülse bestehenden Gefäßes die zusätzliche Verlängerung entsprechend ausgewechselt werden und entsprechend dem Durchmesser des zu sleevenden Gegenstandes auch die Schneidvorrichtung völlig ausgewechselt werden. Beides bringt zwangsläufig Rüstzeiten mit sich, die einer Erhöhung der Durchlaufgeschwindigkeit derartiger Einrichtungen im Wege stehen.

Aus der Patentschrift US 5531858 ist eine Vorrichtung zum Überstreifen von Sleeves bekannt. Den Figuren 8 und 16 sind Vorrichtungen zu entnehmen, die eine Folienhülle abtrennen.
Hierbei rotiert entweder ein Ring mit einem Dorn, der die Folie abtrennt, wobei der Dorn in die innere Bohrung der Scheibe ragt, oder es handelt sich um rotierende Messer die in Form von Schneidebalken ausgebildet sind.

Aus der Patentschrift US 5001887 ist ebenfalls eine Vorrichtung zu entnehmen, die Folienhüllen, die über einen Gegenstand geführt wurden, abtrennt. Nach dem die Folien über einen Dorn geführt wurden, an den sich der Gegenstand anschließt, wird durch einen rotierenden Balken, an dessen Ende ein Messer angeordnet ist, die Folie zwischen dem Ende des Dorns und dem Anfang des Gegenstandes abgetrennt.

Aus der französischen Druckschrift 2730210 ist eine Vorrichtung bekannt, mit Hilfe derer Folienschläuche über einen Gegenstand geführt werden und anschließend abgetrennt werden. Bei den Trennwerkzeugen handelt es sich um eine Vielzahl von Messern, die ringförmig um den Gegenstand angeordnet sind.
Durch einen Auslösemechanismus werden die Messer in Richtung des Gegenstandes bewegt, wobei sich entweder die Messer rotierend um den Gegenstand bewegen oder der Gegenstand selber rotiert.

Aus der US Patentschrift 5566527 ist eine Vorrichtung zum Trennen von Folienschläuchen bekannt, die über einen Gegenstand geführt wurden. Hierbei handelt es sich um ein Messer, das auf einer Kreisbahn mit Hilfe einer entsprechenden Führungsschiene um den Gegenstand bewegt wird, wobei das spitze Messer den Folienschlauch abtrennt.

Aus der US Patentschrift 4179863 ist eine Vorrichtung bekannt, die Folienschläuche, nachdem sie über einen Dorn geführt wurden, abtrennt. Hierbei handelt es sich ebenfalls um einen rotierenden Mechanismus, der um den Folienschlauch rotiert und mit Messern versehen ist, die sich in die innere Öffnung des ringförmigen Schneidemittels erstrecken.

Weiterhin wird durch die Bereitstellung verschiedener zusätzlicher Verlängerungen und verschiedener zusätzlicher Schneideinrichtungen, von welchen jede auf einen bestimmten Durchmesser bzw. eine bestimmte Länge des zu sleevenden Gegenstands abgestimmt sein müssen, ein beachtlicher Maschinenpark erforderlich. Ein Sleeven von Gegenständen in bunter Folge ist ebenfalls nicht möglich. Auch wenn durch Erhöhung der Durchlaufgeschwindigkeiten versucht wird, die oben geschilderten Totzeiten zu reduzieren, tritt dann sofort die Gefahr einer Lautstärkenerhöhung auf, welche zusätzliche Dämmmaßnahmen erfordert, deren finanzieller Umfang bei der Größe derartiger Maschinen nicht zu vernachlässigen ist.

Ausgehend hiervon liegt der vorliegenden Erfindung die Aufgabe zugrunde, ohne Umrüstzeiten für die Trenneinrichtung mehrere Gefäße verschiedenen Durchmessers mit Deckel in bunter Folge zu umhüllen und dies bei erhöhtem Durchsatz, ohne dass eine Erhöhung des Lärmpegels eintritt.

Diese Aufgabe wird erfindungsgemäß durch das Verfahren nach Anspruch 1 und durch die Vorrichtung nach Anspruch 5 sowie durch die Vorrichtung nach Anspruch 6 gelöst.

Zweckmäßige Weiterbildungen der Erfindung sind Gegenstand der betreffenden abhängigen Ansprüche.

Mit diesem Verfahren und den Vorrichtungen wird der geöffnete Folienschlauch an einem Punkt seines Außenumfangs beginnend geradlinig undsenkrecht zur Folienschlauchachse in Richtung des Durchmessers fortschreitend bis zu einem gegenüberliegenden Punkt an seinem Außenumfang aufgetrennt. Durch die völlige Abkehr vom Schneiden in koaxialer Richtung, bezogen auf den Folienschlauch, wird ein sicheres Auftrennen unabhängig vom Durchmesser des Folienschlauchs erreicht. Gleichzeitig können mehrere derartiger Folienschläuche gleichzeitig durchtrennt werden.

In Ausgestaltung der Erfindung wird gemäß Anspruch 2 unter Schutz gestellt, dass der Folienschlauch auch zu beiden Seiten und parallel zum Schnittverlauf abgestützt ist. Insbesondere bei kleinen Wanddicken geöffneter Folienschläuche wird durch die erfindungsgemäße Abstützung erreicht, dass ein glatter und gerader Schnitt senkrecht zur Achse des Folienschlauchs durchgeführt wird.
In noch weiterer Ausgestaltung des erfinderischen Verfahrens wird gemäß Anspruch 3 vorgeschlagen, dass das mittels Schrumpfvorgang zu verschließende mehrteilige Gefäß beim Trennvorgang den Folienschlauch abstützend trägt. Durch diese erfinderische Verwendung des zu sleevenden Werkstücks selbst kann weiterhin das Werkstück erfindungsgemäß für die Bestimmung der Länge des zu sleevenden Folienschlauchstücks herangezogen werden.

In noch weiterer Ausgestaltung des erfinderischen Verfahrens gemäß Anspruch 4 wird vorgeschlagen, dass der Folienschlauch nach Erreichen einer vorgegebenen Position seines vorderen Endes hinter der Trennstelle in Abhängigkeit zu seiner auf einem Gefäß mit Deckel einnehmenden Aufschrumpflänge vom geöffneten Folienschlauch als Stück abgetrennt wird. Hiermit lässt sich erfindungsgemäß auch bei Einsatz eines Zwischenträgers in bunter Folge ein Abtrennen verschieden langer Folienschlauchstücke von einem endlos geöffneten Folienschlauch bewirken. Dies bringt nicht nur eine Einsparung an aufzutrennenden Folienschläuchen, sondern auch im Hinblick auf eine Schonung der Umwelt durch Vermeiden von Abfallteilen einen wesentlichen Spareffekt.

Insbesondere wird durch die vorliegende Erfindung, welche unter Vermeidung der bisherigen koaxialen Auftrennung eine in Richtung des Durchmessers fortschreitende Auftrennung lehrt, Richtung des Durchmessers fortschreitende Auftrennung lehrt, der bisherige Durchsatz bekannter Einrichtungen durch gleichzeitiges vielfaches Auftrennen in bunter Folge anfallender zu sleevender Gefäße wesentlich erhöht.

Bei der Vorrichtung nach dem unabhängigen Anspruch 5 mit einem von einem Vorrat abzuziehend flachliegenden Folienschlauch, einem Öffnungsdorn mit Abziehvorrichtung, einer daran anschließenden Abtrenneinrichtung und einer daran anschließenden Fördereinrichtung ist in Fortschrittsrichtung des geöffneten Folienschlauchs direkt hinter dem Öffnungsdorn ein um eine Drehachse rotierendes von dieser sich wegerstreckendes senkrecht zur Drehachse schneidendes in einer Ebene verlaufendes Bauteil vorgesehen, wobei dessen Drehachse parallel zur Achse des Öffnungsdorns verläuft und das schneidende Bauteil und der Folienschlauch sich relativ zueinander bewegen. Hiermit wird eine Vorrichtung vorgestellt, welche sowohl einen einzigen Folienschlauch oder auch mehrere Folienschläuche, die denselben Durchmesser besitzen oder auch mit verschiedenen Durchmessern, also in bunter Folge ankommen, auftrennbar werden, und zwar durch das relative Zueinander-Bewegen des Bauteils zu dem mindestens einen Folienschlauch.

Bei der Vorrichtung nach dem unabhängigen Anspruch 6 ist in Fortschrittsrichtung des geöffneten Folienschlauchs direkt hinter dem Öffnungsdorn ein um mindestens zwei parallel zueinander angeordnete Drehachsen parallel zur Richtung der Drehachsen umlaufendes schneidendes Bauteil vorgesehen.

Gemäß einer Weiterbildung dieser Vorrichtung ist zwischen vor- und rücklaufendem Trum des parallel zur Richtung der Drehachsen schneidenden Bauteils die Förderrichtung für mindestens ein Gefäß vorgesehen. Durch diese erfindungsgemäße Vorrichtung zur Durchführung des Verfahrens wird eine Kompaktbauweise erreicht, bei welcher Förder- und Trenneinrichtung erfindungsgemäß durcheinander durchlaufen können, ohne dass eine Einschränkung in bezug auf eine Vielfalt von Bauhöhen oder Durchmessern zu sleevender Gefäße hingenommen werden muss.

Eine Ausgestaltung der erfindungsgemäßen Vorrichtungen besteht gemäß Ansprüche 8 darin, dass in Fortschrittsrichtung des Folienschlauchs hinter dem schneidenden Bauteil oder dem umlaufenden schneidenden Bauteil mindestens ein dem Öffnungsdorn im Durchmesser entsprechender Hilfsdorn vorgegebener Länge zur Aufnahme der abgetrennten Folienschlauchstücke vorgesehen ist, dass der mindestens eine Hilfsdorn auf einem sich bewegenden Transporteur angeordnet ist, dass das mindestens eine Gefäß im Bereich seines Bodenumfangs abgestützt auf einem weiteren sich bewegenden Transporteur angeordnet ist, dass eine Übergabestelle zwischen dem vom Hilfsdorn getragenen Folienschlauchabschnitt und dem abgestützten Gefäß vorgesehen ist. Diese erfindungsgemäße Ausgestaltung findet dort Anwendung, wo zu sleevende Gefäße zufolge ihrer Länge bei geringem Durchmesser oder ihres Längen-Breitenverhältnisses bei einem Transport in senkrechter Lage umkippen können (als Beispiel werden hierfür Bleistifte oder andere mit Minen versehene Gerätschaften genannt, wie Lippenstifte). Obwohl in diesem Falle die Schlauchabschnitte auf einen Hilfsdorn aufgefahren werden, ist zufolge der Durchgängigkeit insbesondere der Auftrenneinrichtung nach Anspruch 5 die Möglichkeit gegeben, eine Vielzahl derartiger Folienschlauchstücke gleichzeitig aufzufahren oder auf eine Mehrzahl von Hilfsdornen aufzufahren. Unabhängig von dem Auftrennen wird jeweils ein Teil der mit Folienschlauchstücken bereits versehenen Hilfsdorne über einen Transporteur den auf einem ebenfalls auf einem umlaufenden Transporteur zugeförderten Gefäßen übergeben, sodass beim weiteren Transport beider Transporteure wieder ein leerer Hilfsdorn in den Bereich des Öffnungsdorns zurückkehrt und dort entsprechend der später vorzunehmenden Aufschrumpflänge auf dem Gefäß abgeschnitten werden kann.

In Anspruch 9 wird in einer Weiterbildung der Erfindung eine Vorrichtung unter Schutz gestellt, die sich dadurch auszeichnet, dass mindestens zwei Reihen von Gefäßen auf der Fördereinrichtung transportiert werden, dass die mindestens zwei nebeneinander in Förderrichtung stehenden Gefäße gleichzeitig mit geöffneten Folienschläuchen überzogen werden, dass das schneidende Bauteil oder das umlaufende schneidende Bauteil feststehend angeordnet sind, dass die mindestens beiden Folienschläuche gleichzeitig abgetrennt werden, dass die Fördereinrichtung zurückfährt, neue Gefäße mit Folienschläuchen beschickt werden, während die mit Folienschlauchabschnitten versehenen Gefäße an einen weiterführenden Förderer abgegeben werden, dass bei erneutem Vorfahren der Fördereinrichtung erneut die Folienschläuche gleichzeitig abgeschnitten werden. Durch diese erfinderische Ausgestaltung, bei der die schneidenden Bauteile feststehend angeordnet sind, können gemäß der Erfindung mehrere nebeneinander, verschiedene Durchmesser besitzende, also eine bunte Reihe bildender, Öffnungsdorne mit Folienschläuchen entsprechend der zu sleevenden Gefäße mit Schlauchabschnitten in der entsprechenden Länge versehen werden, wobei dann nach einem Auftrennen die mit Folienschläuchen versehenen Gefäße direkt dem Aufschrumpfvorgang zugeführt werden können.

Nach Anspruch 5 ist das schneidende in einer Ebene verlaufende Bauteil als Kreisscheibe ausgebildet. Als Kreisscheibe lässt sich das schneidende Bauteil mit seiner Drehachse sehr leicht sowohl vertikal als auch horizontal anordnen und kann somit unabhängig an die Zufuhrrichtung der zu sleevenden Gefäße angepasst werden.

Gemäß Anspruch 6 ist das um mindestens zwei zueinander parallele Achsen umlaufende schneidende Bauteile als Band ausgebildet. Dadurch ist es möglich, zwischen dem vor- und dem rücklaufenden Trum ein Transportorgan hindurchzuführen. Auch kann dieses schneidende Bauteil in jeder beliebigen Richtung zur Transportrichtung der für das Sleeven vorzubereitenden Bauteile angeordnet werden.
In noch weiterer Ausgestaltung der Erfindung wird vorgeschlagen. dass die Kreisscheibe an ihrem Umfang gezahnt ist. Hierbei wird darauf hingewiesen. dass es sich bei der Zahnung am Umfang auch um schneidende Körper wie Korund handeln kann. Ferner kann das Band auf einer Schmalseite gezahnt sein. Auch hierfur sind andere Trennmittel auf der Schmalseite als unter den Umfang der Erfindung fallend anzusehen.

In der nachfolgenden Beschreibung wird die Erfindung anhand schematisch dargestellter Ausführungsbeispiele näher erläutert.

Es zeigen in schematischer Darstellung:
Figur 1 eine erfindungsgemäße Öffnungs- und Trenneinrichtung für einen Folienschlauch in Ansicht
Figur 2 eine Draufsicht auf die erfindungsgemäße Einrichtung nach Figur 1
Figur 3 eine andere erfindungsgemäße Ausgestaltung einer Trenneinrichtung
Figur 4a eine erfindungsgemäße Übergabeeinrichtung für zu sleevende schlanke Gegenstände in Ansicht.
Figur 4b die übergabeeinrichtung nach Figur 4a in Draufsicht

In der nachfolgenden Beschreibung werden gleiche Bauteile mit denselben Bezugsziffern bezeichnet.

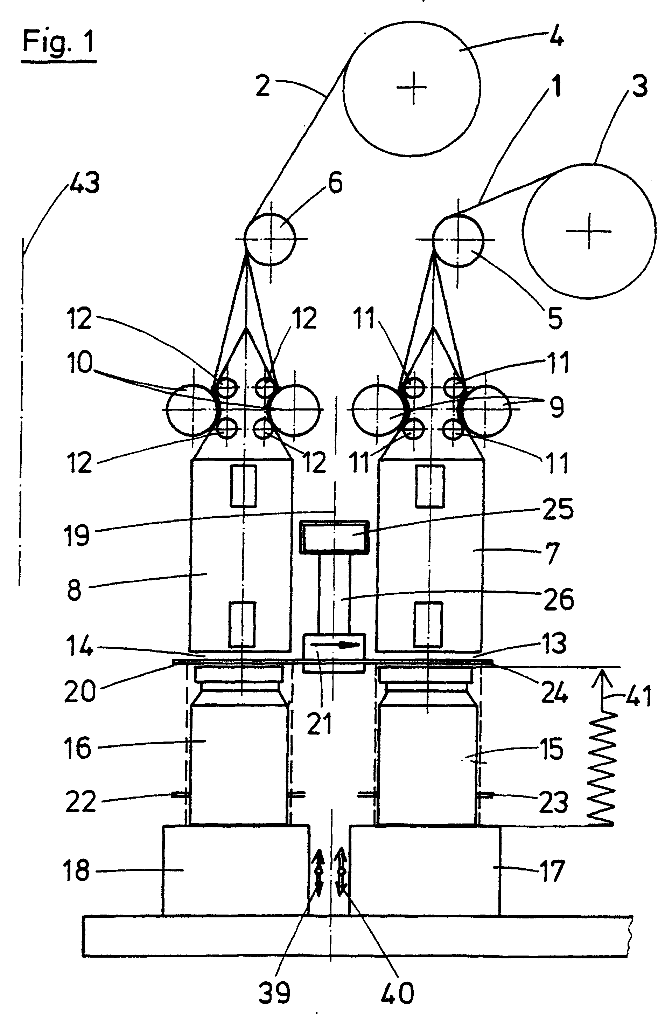

Gemäß Figur 1 werden flachliegende Folienschläuche 1, 2 von Haspeln 3, 4 über ümlenkrollen 5, 6. Öffnungsdornen 7, 8 zugeführt. Mit Hilfe je eines Reibräderpaares 9, 10, welches mit Hilfsrollen 11. 12 zusammenarbeitet, wird der jeweilige Folienschlauch 1 bzw. 2 über den Öffnungsdorn 7 bzw. 8 geführt und am Ende des öffnungsdorns über einen jeweiligen freien Zwischenraum 13, 14 auf ein aus Deckel und Hülse bestehendes Gefäß 15 bzw. 16 aufgeschoben.
Die Gefäße 15, 16 stehen jeweils auf Förderbändern 17 bzw. 18 die sich in ihrer Fortschrittsrichtung aus der Zeichnungsebene senkrecht zu dieser aus dieser heraus oder in diese hinein bewegen.

Zunächst wird gemäß Figur 1 angenommen, dass während des Überstreifens der Folienschläuche 1 und 2 über die Gefäße 15, 16 die Öffnungsdorne 7. 8 synchron mit den Förderbändern 17. 18 sich entlang bewegen.

Zwischen den beiden Öffnungsdornen 7, 8 ist nunmehr ein um eine parallel zu den Achsen der Öffnungsdorne sich erstreckende Antriebsachse 19 rotierendes, von dieser sich wegerstreckendes, senkrecht zur Drehachse schneidendes, in einer Ebene verlaufendes Bauteil bzw. Trennmittel 20 vorgesehen, welches in Pfeilrichtung 21 rotiert.

Nach Erreichen einer Endlage 22, 23 in Bezug zum Gefäß 15 wird die Rotation der Haspeln 3, 4 unterbrochen, und es werden die mit einem Folienschlauch überzogenen Gefäße dem in einer Ebene verlaufenden Bauteil 20 zugeführt. Bei dem Bauteil 20 handelt es sich gemäß Ausführungsbeispiel um ein Kreissägeblatt 24, welches von einem Antriebsmotor 25 über eine Welle 26 angetrieben wird.

Durch das Fortschreiten der Förderbänder 17, 18 und die Rotation des Kreissägeblatts 24 werden während des Fortschreitens gleichzeitig beide Folienschläuche im Bereich des freien Zwischenraums aufgeteilt.

Nach Durchtrennen der Folienschläuche werden die nun mit Folienschlauch überzogenen Gefäße 15, 16 einer Sleeveinrichtung, welche nicht dargestellt ist, zugeführt und dort mittels Aufschrumpfen so gesichert, dass ein unbeabsichtigtes Öffnen der aus Deckel und Hülse bestehenden Gefäße ohne Zerstörung des Folienschlauchs nicht geschehen kann.

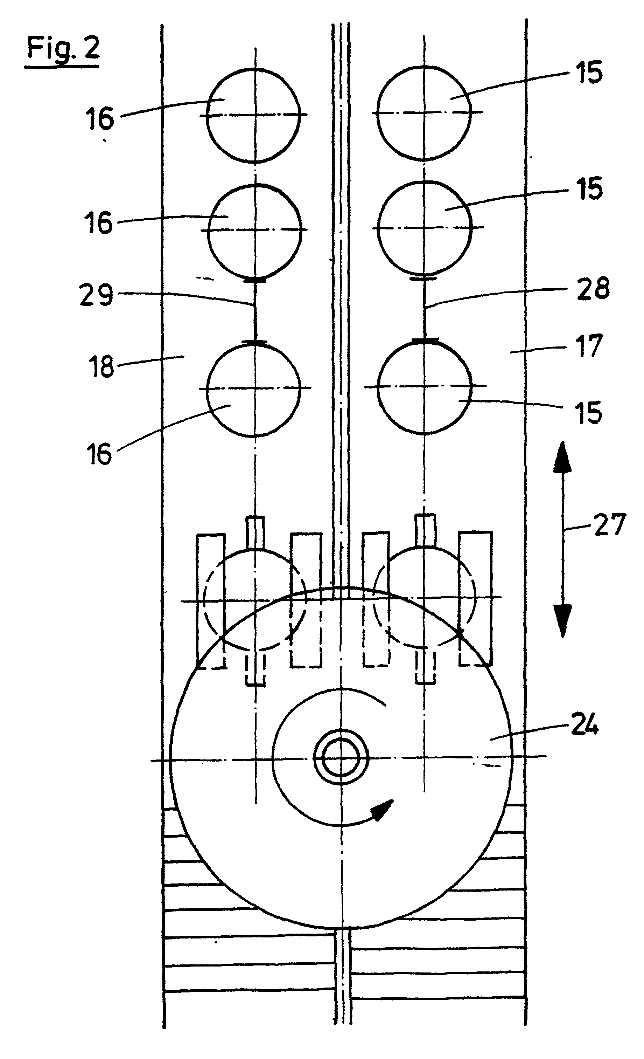

Gemäß Figur 2 wird anschließend das Förderband 17 und 18 gemäß Doppelpfeil 27 zurückgeschwenkt, sodass das nächste Paar Gefäβe 15, 16 gleichzeitig in Wirkverbindung mit den Öffnungsdornen 7, 8 gebracht werden kann, und somit werden erneut die Gefäße 15, 16 mit Folienschlauch während des Fortschreitens der Förderbänder 17, 18 versehen.
Zur Erhöhung der Durchsatzgeschwindigkeit und damit zur Erhöhung des Ausstoßes ist es jedoch mittels der Erfindung auch denkbar, das Kreissägeblatt 24 um seinen Antriebsmotor 25 pendelnd aufzuhängen. Damit wird die Möglichkeit geschaffen, die Abstände 28, 29 zwischen den Gefäßen 15, 16 noch weiter zu verkürzen.

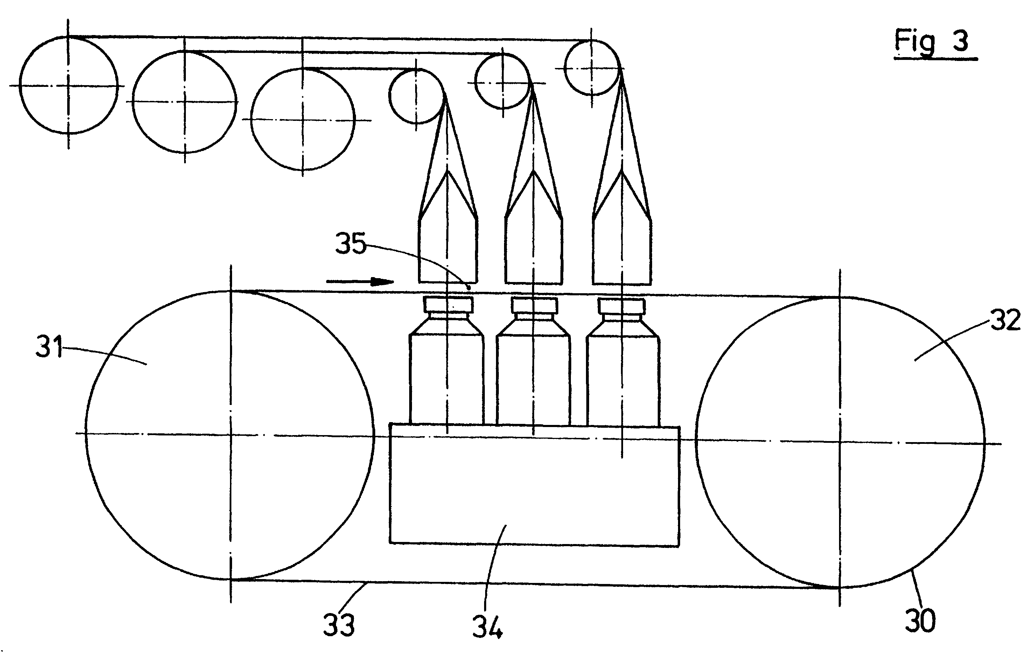

Anstelle des Kreissägeblatts 24 wird gemäß Figur 3 eine Bandsäge 30 benutzt, welche über Umlenkscheiben 31, 32 ein Trennband 33 trägt.

Im Zwischenraum zwischen den Umlenkscheiben 31, 32 ist eine weitere Fördereinrichtung 34 vorgesehen, auf welcher beispielsweise drei Gefäße nebeneinander angeordnet sind. Jedem dieser Gefäße ist ein Öffnungsdorn und eine Haspel mit Folienschlauch zugeordnet.

Sind die Gefäße mit Folienschlauchabschnitten versehen, wird durch Bewegen des Bandes 33 in Doppelpfeilrichtung 35 ein Auftrennen des jeweiligen Folienschlauchs im freien Zwischenraum zwischen Öffnungsdorn und jeweiligem Gefäß geschehen.

Damit lässt sich ein noch höherer Durchsatz.von zu sleevenden Geräten auch bei verschiedener Höhe der Gefäße allein durch Absenken oder Anheben der weiteren Fördereinrichtung 34 erfindungsgemäß erreichen.

Gleiches gilt auch bei einer Anlieferung von zu sleevenden Gefäßen in bunter Folge, in Bezug auf die Höhe dieser Gefäße, wenn, wie in Figur 1 durch Doppelpfeile 39, 40 dargestellt, die Förderbänder 17, 18 in ihrer Höhe wechselweise gegenüber der feststehenden, horizontal schneidenden Kreissäge 24 angeordnet sind.

In Abhängigkeit einer schematisch dargestellten Abtasteinrichtung 41, bei welcher die Höhe des jeweiligen Gefäßes abgetastet wird, wird in Verbindung mit der in ihrer Arbeitshöhe bezogen auf die Öffnungsdorne 7, 8 festliegenden Kreissäge 24 rechtzeitig ein Steuerbefehl an die Fördereinrichtung 17 bzw. 18 weitergegeben, sodass die Fördereinrichtung 17, 18 gegenüber ihrer Normalhöhe vor Einleiten des Schneidvorgangs rechtzeitig angehoben oder abgesenkt wird.
Werden auch in bunter Folge Gefäße verschiedenen Durchmessers vorbereitet, so kann auf einem um eine Karussellachse 43 sich drehendes Karussell, auf welchem auf Haspeln angeordnete Folienschläuche vorgegebener Breite angeordnet sind, durch Weiterbewegen des Karussells, entsprechend der erforderlichen Durchmesserkonfiguration des einzelnen Gefäßes, jeweils der richtige Folienschlauch ausgewählt werden und durch Drehen des nicht dargestellten Karussells um die Drehachse 43 in Verbindung mit dem zu sleevenden Gefäß gebracht werden.

Damit lässt sich ohne zeitaufwendigen Umbau eine große Palette von Gefäßen, welche im Durchmesser und in der Höhe variieren, für ein Sleeven vorbereiten, ohne dass zeitaufwendiges Umbauen erforderlich wird.

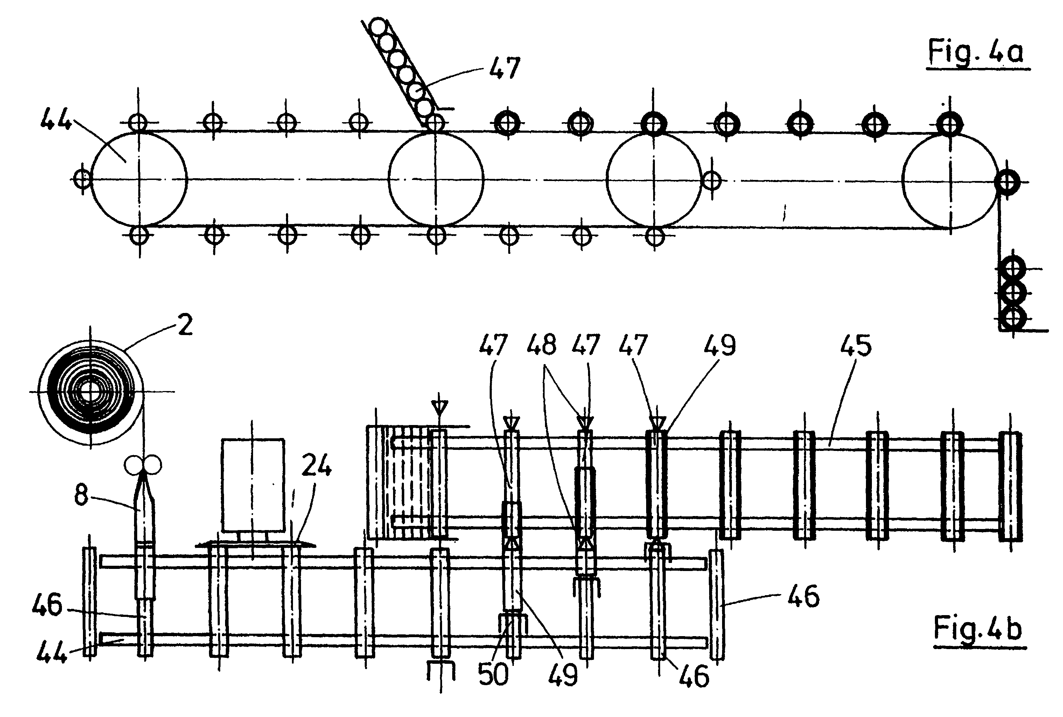

Die in Figur 4a in der Ansicht dargestellte Ausgestaltung des Erfindungsgegenstandes und die in Figur. 4b in der Draufsicht dargestellte Anordnung dienen für schmale längliche Gegenstände, beispielsweise Lippenstifte.

Ein erster Transporteur 44 arbeitet mit einer Kreissäge 24 zusammen. Hierbei wird über den öffnungsdorn 8 der Folienschlauch 2 geöffnet und einem Hilfsdorn 46 zugeführt. Durch das Fortschreiten des Tranporteurs 44 gegen die feststehende Kreissäge 24 bei Mitbewegen des Dorns 8 und des Folienschlauchs 2 wird der Folienschlauch 2 abgetrennt, sodass das Folienschlauchstück auf dem Hilfsdorn 46 verbleibt.

Hinter der Kreissäge 24 ist nun ein weiterer Transporteur 45 angeordnet, welcher beispielsweise aus einer nicht dargestellten Fertigungslinie kommende fertig konfektionierte Lippenstifte 47 abzieht und auf dem weiteren Transporteur 45 lagerichtig positioniert. Hierbei besitzt sowohl der erste Transporteur 44 Gegenhalter 48 und auch der weitere Transporteur 45 Gegenhalter 48. Die Gegenhalter 48 treten dann in Funktion, wenn Folienschläuche über den Hilfsdorn 46 oder beispielsweise über den Lippenstift 47 geschoben werden. Im Falle des Aufschiebens von Folienschlauchstücken 49 auf den Lippenstift 47 wird über eine schematisch dargestellte Aufschiebeeinrichtung 50 während des synchronen Transports des ersten Transporteurs 44 mit dem weiteren Transporteur 45 der Aufschubvorgang beendet, während der nunmehr freigewordene Hilfsdorn 46 wieder an den Anfang des Transporteurs zurücktransportiert wird, während gleichzeitig vom weiteren Transporteur 45, der nunmehr mit einem Folienschlauchstück 49 versehene Lippenstift 47 einer nicht dargestellten Sleeveinrichtung zugeführt wird.

Wird an Stelle eines Kreissägeblatts 24 um den ersten Transporteur 44 eine Bandsäge entsprechend Figur 3 angeordnet, so wird beispielsweise jeder gerade Gegenhalter mit dem weiteren Transporteur 45 zusammenwirken, während jeder ungerade Gegenhalter mit einem nicht dargestellten noch weiteren Transporteur, auf der anderen Seite des ersten Transporteurs 44 angeordnet, zusammenarbeitet. Damit lässt sich auch hier eine beachtliche Erhöhung des Durchsatzes von zu sleevenden Bauteilen erreichen und es lässt sich auch in einfachster Form eine bunte Reihe verschieden langer und verschiedenene Durchmesser besitzender, schlanker Bauteile, wie Lippenstifte oder Kugelschreiber, für einen Sleevevorgang vorbereiten.
In Figur 4a ist in schematischer Darstellung eine Rutsche 50 dargestellt, aus welcher fertig konfektionierte Lippenstifte, beispielsweise auf dem weiteren Transporteur 45 ausgerichtet, an Gegenhaltern anliegend aufgebracht werden.

## Patentansprüche

1. Verfahren zum Abtrennen eines geöffneten Folienschlauchstücks von einem endlos aufgewickelten flachliegenden Folienschlauch (1 bzw. 2), für dessen anschließendes Aufziehen und vorzugsweises Aufschrumpfen auf einen Gegenstand (15),
- mit einem ersten Schritt, bei dem der Folienschlauch über einen Öffnungsdorn (7, 8) geführt wird und solange transportiert wird, bis er in einer bestimmten Länge über das Ende des Öffnungsdorns geführt wurde,
- mit einem zweiten Schritt, bei dem durch ein kreisförmiges rotierendes Trennmittel (20), das an seinem äußeren Umfang eine umlaufende Schneide oder Zahnung aufweist, der über das Ende des Öffnungsdorns ragende Folienschlauch abgetrennt wird, wobei entweder das Trennmittel (20) oder der Öffnungsdorn (7, 8) relativ bewegt werden,
oder bei dem durch ein um mindestens zwei Achsen rotierendes Trennband (33), das an seinem äußeren Umfang eine umlaufende Schneide oder Zahnung aufweist, der über das Ende des Öffnungsdorns ragende Folienschlauch abgetrennt wird, wobei entweder das Trennband (33) oder der Öffnungsdorn relativ bewegt werden.

2. Verfahren nach dem vorhergehenden Anspruch, **dadurch gekennzeichnet, dass** der Folienschlauch (1 bzw. 2) zu beiden Seiten des Schnittverlaufs und parallel zum Schnittverlauf abgestützt ist.

3. Verfahren nach einem oder mehreren der vorhergehenden Ansprüche, **dadurch gekennzeichnet, dass** der mittels Schrumpfvorgang zu verschließende Gegenstand (15) beim Trennvorgang den Folienschlauch (1 bzw. 2) abstützend trägt.

4. Verfahren nach einem oder mehreren der vorhergehenden Ansprüche, **dadurch gekennzeichnet, dass** der Folienschlauch (1 bzw. 2) nach Erreichen einer vorgegebenen Position (22, 23) seines vorderen Endes hinter einer Trennstelle (13) in Abhängigkeit von der auf dem Gegenstand (15) einnehmenden Aufschrumpflänge vom geöffneten Folienschlauch als Stück abgetrennt wird.

5. Vorrichtung zum Abtrennen eines geöffneten Folienschlauchstücks mit einem von einem Vorrat abzuziehenden flachliegenden Folienschlauch (1 bzw. 2), einem Öffnungsdorn (7, 8) mit Abziehvorrichtung, einer daran anschließenden Abtrenneinrichtung (20) und einer daran anschließenden Fördereinrichtung (17, 18) für ein mit dem Folienschlauch zu überziehenden Gegenstand (15), **dadurch gekennzeichnet, dass** in Fortschrittsrichtung des geöffneten Folienschlauchs hinter dem Öffnungsdorn (7 bzw. 8) ein um eine Drehachse rotierendes, von dieser sich wegerstreckendes, senkrecht zur Drehachse schneidendes, in einer Ebene verlaufendes kreisförmiges Trennmittel (20) mit am äußeren Rand umlaufendender Schneide oder mit umlaufenden Sägezähnen angeordnet ist, wobei dessen Drehachse (19) vorzugsweise parallel zur Achse des Öffnungsdorns (7 bzw. 8) verläuft und mit Mitteln, die das schneidende Trennmittel (20) und den Folienschlauch (1 bzw. 2) relativ zueinander bewegbar machen.

6. Vorrichtung zur Durchführung des Verfahrens nach einem o-der mehreren der vorhergehenden Verfahrens ansprüche, mit einem von einem Vorrat (3, 4) abzuziehenden flachliegenden Folienschlauch (1 bzw. 2), einem Öffnungsdorn (7, 8) mit Abziehvorrichtung, einer daran anschließenden Abtrenneinrichtung und einer daran anschließenden Fördereinrichtung (17, 18) für ein mit dem Folienschlauch zu überziehenden Gegenstand (15), **dadurch gekennzeichnet, dass** in Fortschrittsrichtung des geöffneten Folienschlauchs hinter dem Öffnungsdorn (7 bzw. 8) ein Trennband (33) ausgebildet ist, das um mindestens zwei zueinander vorzugsweise parallel angeordnete Achsen läuft, wobei mindestens eine Kante des Trennbandes als Schneide oder als Säge ausgebildet ist, wobei die Achsen vorzugsweise vertikal zur Achse des Öffnungsdorns (7 bzw. 8) verlaufen und mit Mitteln, die das schneidende Trennband (33) und den Folienschlauch (1 bzw. 2) relativ zueinander bewegbar machen.

7. Vorrichtung nach Anspruch 6 mit einer Fördereinrichtung für ein aus Deckel und einseitig geschlossener Hülse bestehendem Gefäß (15), **dadurch gekennzeichnet, dass** zwischen vor- und rücklaufendem Trum des parallel zur Richtung der Drehachsen schneidenden Trennbandes (33) die Fördereinrichtung (34) für ein Gefäß (15) oder mehrere vorgesehen ist.

8. Vorrichtung nach einem oder mehreren der vorhergehenden Vorrichtungsansprüche, **dadurch gekennzeichnet, dass** in Fortschrittsrichtung des Folienschlauchs (1 bzw. 2) hinter dem schneidenden Trennmittel (20) oder dem umlaufenden schneidenden Trennband (33) mindestens ein dem Öffnungsdorn (7 bzw. 8) im Durchmesser entsprechender Hilfsdorn (46) vorgegebener Länge zur Aufnahme der abgetrennten Folienschlauchstücke vorgesehen ist, dass der mindestens eine Hilfsdorn (46) auf einem sich bewegenden Transporteur (44) angeordnet ist, dass das mindestens eine Gefäß (15) im Bereich seines Bodenumfangs abgestützt auf einem weiteren sich bewegenden Transporteur (45) angeordnet ist und dass eine übergabestelle zwischen dem vom Hilfsdorn (46) getragenen Folienschlauchabschnitt und dem abgestützten Gefäß (15) vorgesehen ist.

9. Vorrichtung nach einem oder mehreren der vorhergehenden Vorrichtungsansprüche, **dadurch gekennzeichnet, dass** Mittel vorhanden sind, die mindestens zwei Reihen von Gefäßen (15) auf der Fördereinrichtung (34) transportieren können, dass Mittel vorhanden sind, die mindestens zwei nebeneinander in Förderrichtung stehende Gefäße (15) gleichzeitig mit geöffneten Folienschläuchen überziehen können, dass das schneidende Trennband (33) oder das umlaufende schneidende, kreisförmige Trennmittel (20) feststehend angeordnet sind, dass die mindestens beiden Folienschläuche gleichzeitig abgetrennt werden, und dass Mittel vorhanden sind, welche die Fördereinrichtung (18) zurückfahren, um neue Gefäße (15) mit Folienschläuchen (1 bzw. 2) zu beschicken, während die mit Folienschlauchabschnitten versehenen Gefäße (15) durch Mittel an einen weiterführenden Förderer (17) abgegeben werden, wobei bei erneuter Vorfahrt der Fördereinrichtung erneut die Folienschläuche gleichzeitig abgeschnitten werden.

## Claims

1. Method of cutting off an opened piece of tubular film from an endlessly wound flat tubular film (1 or 2), for subsequently drawing it and preferably shrinking it onto an article (15),
- comprising a first step in which the tubular film is directed over an opening mandrel (7, 8) and is transported until it has been directed in a certain length over the end of the opening mandrel,
- comprising a second step in which the tubular film projecting beyond the end of the opening mandrel is cut off by a circular rotating cut-off means (20) which has an encircling cutting edge or tooth system on its outer circumference, either the cut-off means (20) or the opening mandrel (7, 8) being moved in a relative manner,
or in which the tubular film projecting beyond the end of the opening mandrel is cut off by a cut-off band (33) which rotates about at least two axes and has an encircling cutting edge or tooth system on its outer circumference, either the cut-off band (33) or the opening mandrel being moved in a relative manner.

2. Method according to the preceding claim, **characterized in that** the tubular film (1 or 2) is supported on both sides of the cutting path and parallel to the cutting path.

3. Method according to one or more of the preceding claims, **characterized in that** the article (15) to be closed by means of a shrinkage operation carries the tubular film (1 or 2) in a supporting manner during the cut-off operation.

4. Method according to one or more of the preceding claims, **characterized in that** the tubular film (1 or 2), after reaching a predetermined position (22, 23) of its front end behind a cut-off point (13), is cut off as a piece from the opened tubular film as a function of the shrinkage length taken up on the article (15).

5. Apparatus for cutting off an opened piece of tubular film, comprising a flat tubular film (1 or 2) to be pulled off from a supply, an opening mandrel (7, 8) with pull-off device, a cutting-off device (20) adjoining the latter and a conveying device (17, 18) adjoining said cutting-off device (20) for an article (15) to be covered with the tubular film, **characterized in that** a circular cut-off means (20) which rotates about an axis of rotation, extends away from the latter, cuts perpendicularly to the axis of rotation, runs in one plane and has an encircling cutting edge on the outer rim or encircling saw teeth is arranged in the direction of advance of the opened tubular film behind the opening mandrel (7 or 8), the rotation axis (19) of this cut-off means (20) preferably running parallel to the axis of the opening mandrel (7 or 8), and with means which make the cut-off means (20) and the tubular film (1 or 2) movable relative to one another.

6. Apparatus for carrying out the method according to one or more of the preceding method claims, comprising a flat tubular film (1 or 2) to be pulled off from a supply (3, 4), an opening mandrel (7, 8) with pull-off device, a cutting-off device adjoining the latter and a conveying device (17, 18) adjoining said cutting-off device for an article (15) to be covered with the tubular film, **characterized in that** a cut-off band (33) which runs about at least two axes of rotation preferably arranged parallel to one another is formed in the direction of advance of the opened tubular film behind the opening mandrel (7 or 8), at least one edge of the cut-off band being designed as a cutting edge or as a saw, the axes preferably running vertically to the axis of the opening mandrel (7 or 8), and with means which make the cut-off band (33) and the tubular film (1 or 2) movable relative to one another.

7. Apparatus according to Claim 6, comprising a conveying device for a container (15) consisting of a lid and a sleeve closed on one side, **characterized in that** the conveying device (34) for one container (15) or a plurality of containers is provided between the advancing and returning sides of the cut-off band (33) cutting parallel to the direction of the axes of rotation.

8. Apparatus according to one or more of the preceding apparatus claims, **characterized in that** at least one auxiliary mandrel (46) of predetermined length which corresponds in diameter to the opening mandrel (7 or 8) and is intended for receiving the cut-off pieces of tubular film is provided in the direction of advance of the tubular film (1 or 2) behind the cut-off means (20) or the encircling cut-off band (33), **in that** the at least one auxiliary mandrel (46) is arranged on a moving transporter (44), **in that** the at least one container (15), supported in the region of its base circumference, is arranged on a further moving transporter (45), and **in that** a transfer point is provided between the tubular film section carried by the auxiliary mandrel (46) and the supported container (15).

9. Apparatus according to one or more of the preceding apparatus claims, **characterized in that** there are means which can transport at least two rows of containers (15) on the conveying device (34), **in that** there are means which can simultaneously cover at least two containers (15), disposed next to one another in the conveying direction, with opened tubular films, **in that** the cut-off band (33) or the encircling, circular cut-off means is arranged in a fixed position, **in that** the at least two tubular films are cut off simultaneously, and **in that** there are means which withdraw the conveying device (18) in order to load new containers (15) with tubular films (1 or 2), while the containers (15) provided with tubular film sections are delivered by means to an extending conveyor (17), the tubular films being simultaneously cut off again when the conveying device travels forward again.

## Revendications

1. Procédé pour détacher un segment ouvert de gaine de film d'une gaine de film aplatie enroulée sans fin (1, respectivement 2), en vue de son engagement ultérieur et de préférence de sa contraction sur un objet (15),
- avec une première étape, dans laquelle la gaine de film est conduite sur un mandrin d'ouverture (7, 8) et est transférée jusqu'à ce qu'elle ait été conduite sur une longueur déterminée au-delà de l'extrémité du mandrin d'ouverture,
- avec une seconde étape, dans laquelle la gaine de film dépassant au-delà de l'extrémité du mandrin d'ouverture est détachée par un moyen de séparation (20) circulaire rotatif, qui présente un couteau tournant ou une denture tournante à sa périphérie extérieure, soit le moyen de séparation (20) soit le mandrin d'ouverture (7, 8) étant animé d'un mouvement relatif,
ou dans laquelle la gaine de film dépassant au-delà de l'extrémité du mandrin d'ouverture est détachée par une bande de séparation (33) tournant autour d'au moins deux axes, qui présente un couteau ou une denture en défilement à sa périphérie extérieure, soit la bande de séparation (33) soit le mandrin d'ouverture étant animé d'un mouvement relatif.

2. Procédé suivant la revendication précédente, **caractérisé en ce que** la gaine de film (1, respectivement 2), est soutenue de part et d'autre du tracé de la coupe et parallèlement au tracé de la coupe.

3. Procédé suivant une ou plusieurs des revendications précédentes, **caractérisé en ce que** l'objet (15) à envelopper par l'opération de contraction assure le soutien de la gaine de film (1, respectivement 2) pendant l'opération de séparation.

4. Procédé suivant une ou plusieurs des revendications précédentes, **caractérisé en ce que** la gaine de film (1, respectivement 2) est détachée sous forme de segment de la gaine de film ouverte après avoir atteint une position prédéterminée (22, 23) de son extrémité avant derrière un poste de séparation (13) en fonction de la longueur de contraction enveloppant l'objet (15).

5. Dispositif pour détacher un segment ouvert de gaine de film, avec une gaine de film aplatie (1, respectivement 2) à prélever d'une réserve, un mandrin d'ouverture (7, 8) avec un dispositif de prélèvement, un dispositif de séparation (20) faisant suite à celui-ci et un dispositif de transport (17, 18) faisant suite à celui-ci pour un objet (15) à recouvrir de la gaine de film, **caractérisé en ce qu'**un moyen de séparation circulaire (20), situé dans un plan, tournant autour d'un axe de rotation, s'écartant de celui-ci et coupant perpendiculairement à l'axe de rotation, avec un couteau tournant ou avec des dents de scie tournantes sur le bord extérieur, est disposé derrière le mandrin d'ouverture (7, respectivement 8) dans le sens de la progression de la gaine de film ouverte, dans lequel son axe de rotation (19) est de préférence parallèle à l'axe du mandrin d'ouverture (7, respectivement 8) et avec des moyens, qui rendent mobiles l'un par rapport à l'autre le moyen de séparation coupant (20) et la gaine de film (1, respectivement 2).

6. Dispositif pour la mise en oeuvre du procédé suivant une ou plusieurs des revendications de procédé précédentes, avec une gaine de film (1, respectivement 2) aplatie à prélever dans une réserve (3, 4), un mandrin d'ouverture (7, 8) avec un dispositif de prélèvement, un dispositif de séparation faisant suite à ce dernier et un dispositif de transport (17, 18) faisant suite à ce dernier pour un objet (15) à recouvrir avec la gaine de film, **caractérisé en ce qu'**une bande de séparation (33), qui circule autour d'au moins deux axes disposés de préférence parallèlement l'un à l'autre, est formée derrière le mandrin d'ouverture (7, respectivement 8) dans le sens de la progression de la gaine de film ouverte, dans lequel au moins un côté de la bande de séparation constitue un couteau ou une scie, dans lequel les axes sont de préférence orientés perpendiculairement à l'axe du mandrin d'ouverture (7, respectivement 8) et avec des moyens, qui rendent mobiles l'une par rapport à l'autre la bande de séparation coupante (33) et la gaine de film (1, respectivement 2).

7. Dispositif suivant la revendication 6 avec un dispositif de transport pour un récipient (15) composé d'un couvercle et d'une douille fermée d'un côté, **caractérisé en ce que** le dispositif de transport (34) pour un récipient (15) ou plusieurs est prévu entre le brin d'aller et le brin de retour de la bande de séparation (33) coupante parallèlement à la direction des axes de rotation.

8. Dispositif suivant une ou plusieurs des revendications de dispositif précédentes, **caractérisé en ce qu'**il est prévu, derrière le moyen de séparation coupant (20) ou la bande de séparation coupante en défilement (33), dans le sens de la progression de la gaine de film (1, respectivement 2), au moins un mandrin auxiliaire (46) de longueur prédéterminée, de diamètre correspondant au mandrin d'ouverture (7, respectivement 8), destiné à recevoir les segments détachés de gaine de film, **en ce que** le au moins un mandrin auxiliaire (46) est disposé sur un transporteur en mouvement (44), **en ce que** le au moins un récipient (15) supporté dans la région du périmètre de son fond est disposé sur un autre transporteur en mouvement (45) et **en ce qu'**il est prévu un poste de transfert entre la portion de gaine de film portée par le mandrin auxiliaire (46) et le récipient supporté (15).

9. Dispositif suivant une ou plusieurs des revendications de dispositif précédentes, **caractérisé en ce qu'**il comporte des moyens qui peuvent transporter au moins deux rangées de récipients (15) sur le dispositif de transport (34), **en ce qu'**il comporte des moyens qui peuvent recouvrir en même temps avec des gaines de film ouvertes au moins deux récipients (15) dressés l'un à côté de l'autre dans le sens de transport, **en ce que** la bande de séparation coupante (33) ou le moyen de séparation circulaire coupant tournant (20) sont disposés en position immobile, **en ce que** les au moins deux gaines de film sont détachées simultanément, et **en ce qu'**il comporte des moyens qui ramènent en arrière le dispositif de transport (18), pour munir des nouveaux récipients (15) de gaines de film (1, respectivement 2), tandis que les récipients (15) pourvus de portions de gaine de film sont transférés par des moyens à un transporteur (17) disposé à la suite, les gaines de film étant à nouveau coupées en même temps lors d'une nouvelle avance du dispositif de transport.
